# FASCICULE DE BREVET EUROPEEN

(11) **EP 0 524 119 B1**
(45) Date de publication et mention de la délivrance du brevet: **10.09.1997**
(21) Numéro de dépôt: 92440068.2
(22) Date de dépôt: 03.06.1992
(51) Int. Cl.: G06K 9/00, A61B 5/107, A41H 1/00

(54) **Dispositif d'identification et de classification et procédé mis en oeuvre par ledit dispositif**
Verfahren und Gerät zur Identifizierung und Klassifikation
Method and device for identification and classification

(30) Priorité: 03.06.1991 FR 9106773
(43) Date de publication de la demande: 20.01.1993
(73) Titulaire: TELMAT INFORMATIQUE E.U.R.L., F-68360 Soultz (FR)
(72) Inventeur: Dudkiewicz, Gilbert, F-68360 Soultz (FR)
(74) Mandataire: Nuss, Pierre

(56) Documents cités:
- GB-A- 2 159 943
- GB-A- 2 243 987
- US-A- 4 885 844
- 3èME CONGRES RECONNAISSANCE DES FORMES ET INTELLIGENCE ARTIFICIELLE, 16-18 SEPTEMBRE 1981 NANCY, FR pages 371 - 382; P. BAYLOU ET AL.: 'ANALYSE AUTOMATIQUE DU PROFIL DU VISAGE. RECHERCHE DU MEILLEUR CLASSIFIEUR A FIN D'INTENTIFICATION'
- PATENT ABSTRACTS OF JAPAN vol. 10, no. 202 (P-477)15 Juillet 1986 & JP-A-61 044 306

## Description

La présente invention concerne le domaine de la reconnaissance de formes, spatiales ou planes, et a pour objet un dispositif d'identification et de classification de sujets présentant des formes variables non standardisées, ainsi qu'un procédé mis en oeuvre par ledit dispositif.

Actuellement, les systèmes de reconnaissances de formes peuvent en général reconnaître automatiquement des formes géométriques ou encore des associations de formes géométriques. Néanmoins, aucun de ces systèmes existants ne permet, dans le cas de sujets présentant des conformations quelconques, rarement reproduites à l'identique, d'opérer, de manière satisfaisante, une identification et une classification rapides et automatiques desdits sujets sur la base de leur forme extérieure.

En outre, il existe divers dispositifs pouvant générer des représentations tridimensionnelles de sujets à étudier, basés sur une prise en compte d'un nombre élevé de données, effectuée de manière tridimensionnelle, ces données devant toutes être stockées en vue d'une reproduction ultérieure desdites représentations.

Ainsi, ces dispositifs se doivent de posséder une mémoire de très grande taille ainsi des unités de traitement présentant une puissance de calcul élevée. Il en résulte un coût en matériel important et des frais de mise en oeuvre tels qu'ils font obstacle à une application industrielle rentable desdits dispositifs.

Or, il est intéressant, notamment dans le domaine de l'habillement, de pouvoir réaliser une classification rapide d'un grand nombre de sujets, présentant des formes variables non standardisées, dans un nombre de classes restreint définies par exemple au moyen de données nées statistiques établies préalablement, ladite classification s'affinant au cours de sa mise en oeuvre répétée.

De plus, il est également avantageux de pouvoir réaliser des représentations virtuelles en trois dimensions des sujets à étudier, et notamment à habiller, tout en ne mettant en oeuvre qu'une mémoire limitée et en ne traitant qu'un nombre restreint de données.

Par l'article intitulé "Analyse automatique du profil du visage. Recherche du meilleur classifieur à fin d'utilisation", P. BAYLOU ET AL., 3ème Congrès Reconnaissance des Formes et Intelligence artificielle, 16-18 septembre 1981, Nancy, France, pages 371 - 382, on connait déjà un dispositif automatique d'identification et de classification.

Toutefois, ce dispositif connu est destiné spécifiquement à l'identification et à la classification de visages humains, et ne peut opérer une identification et une classification de sujets humains sur la base de la morphologie et des dimensions de leur corps.

De plus, le dispositif connu précité présente une structure figée, dans laquelle la classification ne s'affine pas au cours de sa mise en oeuvre répétée.

En outre, aucune possibilité de réalisation d'une représentation virtuelle tridimensionnelle, avec un nombre de données limitées, n'est mentionné dans le document précité.

La présente invention a notamment pour objet de pallier l'ensemble des inconvénients précités.

A cet effet, elle a pour objet un dispositif automatique d'identification, de classification et de représentation de sujets présentant des formes variables non standardisées, en particulier des sujets humains, principalement constitué, d'une part, par un dispositif 1 de prise de vues planes du corps d'un sujet est ccmposé d'au moins une caméra coopérant avec un écran de fond fortement contrasté par rapport au sujet à identifier et à classer, d'autre part, par un module d'acquisition et de traitement de la ou des vues et d'extraction d'au moins un paramètre dimensionnel caractéristique donné et, enfin, par un module d'identification et de classification des sujets étudiés, au moyen du ou des paramètres caractéristiques extraits, ledit module d'identification et de classification étant constitué par une unité centrale reliée à une base de données et intègrant un programme de simulation de réseau neuronal auto-organisateur, destiné à réaliser une procédure d'identification et de classification du sujet à étudier, sur la base du ou des paramètres caractéristiques extraits, et, en fonction du résultat de la procédure, soit à indiquer les coordonnées de la classe à laquelle le sujet appartient, soit à générer une nouvelle classe définie par les paramètres du sujet ou à intégrer ledit sujet à une classe existante en mémorisant ses paramètres caractéristiques et à réorganiser la structure de classification en conséquence, le module intègrant, de plus, un programme de génération de représentations tridimensionnelles, destiné à réaliser une représentation tridimensionnelle approchante, sous forme d'enveloppe, du sujet à étudier à partir, d'une part, de paramètres dimensionnels extraits de la ou des vues précitées et, d'autre part, de paramètres dimensionnels correspondants et d'une représentation tridimensionnelle d'un modèle de référence représentatif de la classe à laquelle le sujet à étudier appartient.

L'invention a également pour objet un procédé automatique d'identification, de classification et de réprésentation de sujets présentant des formes variables non standardisées, selon la revendication 5.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
La figure 1 est une représentation schématique d'un mode de réalisation du dispositif conforme à l'invention ;
La figure 2 montre, par des vues de face et de profil, le contour d'un sujet humain ainsi que les mesures prises en compte pour l'identification et la classification dudit sujet ;
les figures 3A et 3B montrent les différentes mesures relevées sur un modèle de référence, représenté par son contour suivant une vue de face et une vue de profil ;
les figures 4A et 4B sont des vues similaires aux figures 3A et 3B montrant les différentes mesures relevées sur un sujet à étudier correspondant aux mesures relevées sur le modèle de référence, et,
la figure 5 est une vue schématique représentant les contours d'une même section de coupe d'un modèle de référence et d'un sujet à étudier.

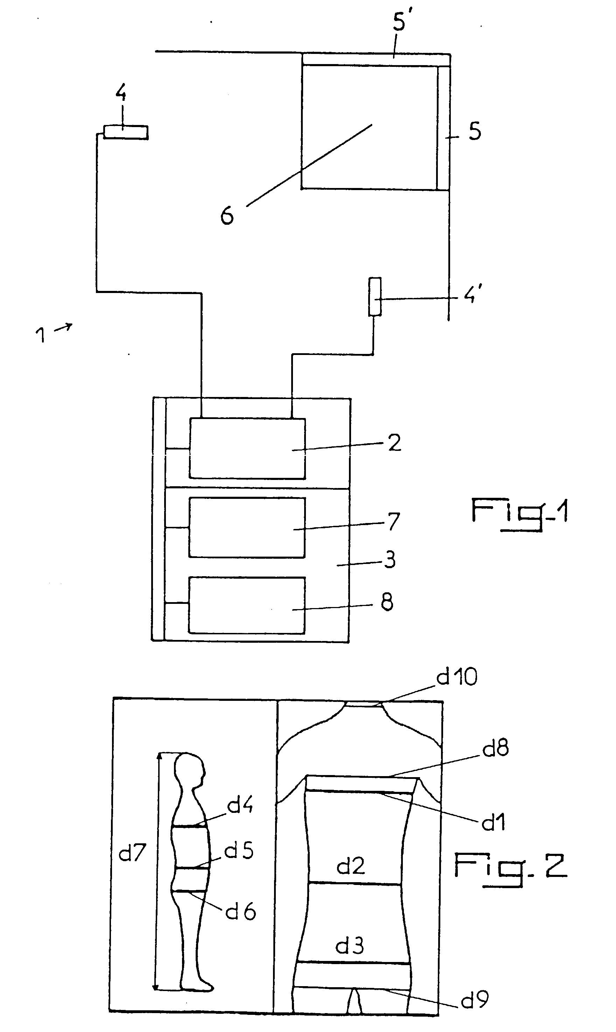

Comme le montre la figure 1 des dessins annexés, le dispositif automatique d'identification et de classification de sujets présentant des formes variables non standardisées, en particulier des sujets humains, principalement constitué, d'une part, par un dispositif 1 de prise de vues, d'autre part, par un module 2 d'acquisition et de traitement de la ou des vues et d'extraction d'au moins un paramètre dimensionnel caractéristique donné et, enfin, par un module 3 d'identification et de classification des sujets étudiés, au moyen du ou des paramètres caractéristiques extraits.

Conformément à l'invention, le dispositif 1 de prise de vues planes du corps d'un sujet 6 est composé d'au moins une caméra 4, 4' coopérant avec un écran de fond 5, 5' fortement contrasté par rapport au sujet à identifier et à classer.

De plus, le module 3 d'identification et de classification est constitué par une unité centrale 7 reliée à une base de données 8 et intègre un programme de simulation de réseau neuronal auto-organisateur, destiné à réaliser une procédure d'identification et de classification du sujet à étudier, sur la base du ou des paramètres caractéristiques extraits, et, en fonction du résultat de la procédure, soit à indiquer les coordonnées de la classe à laquelle le sujet appartient, soit à générer une nouvelle classe définie par les paramètres du sujet ou à intégrer ledit sujet à une classe existante en mémorisant ses paramètres caractéristiques et à réorganiser la structure de classification en conséquence.

En outre, le module 3 intègre un programme de génération de représentations tridimensionnelles, destiné à réaliser une représentation tridimensionnelle approchante, sous forme d'enveloppe, du sujet à étudier à partir, d'une part, de paramètres dimensionnels extraits de la ou des vues précitées et, d'autre part, de paramètres dimensionnels correspondants et d'une représentation tridimensionnelle d'un modèle de référence représentatif de la classe à laquelle le sujet à étudier appartient.

Le ou les écrans de fond 5, 5' peuvent avantageusement se présenter sous la forme de réglettes fluorescentes devant lesquelles sont disposées des parois diffusantes.

Conformément à un mode de réalisation préférentiel de l'invention, représenté à la figure 1 des dessins annexés, le dispositif 1 de prise de vues comporte avantageusement deux caméras 4 et 4', dont les axes de prise de vue forment un angle droit entre eux, chacune coopérant avec un écran de fond 5 et 5' correspondant.

Ainsi, dans le cas de sujets 6 humains, il est possible de réaliser simultanément une vue de face et une vue de profil, les deux vues pouvant être réalisées à des distances et dans des plans différents, en fonction des paramètres dimensionnels à extraire (figures 2, 3A, 3B, 4A et 4B).

Selon un autre mode de réalisation, non représenté aux dessins annexés, le dispositif 1 de prise de vues est constitué par une caméra 4, 4' mobile autour du sujet 6 à identifier et à classifier, l'écran de fond 5, 5' pouvant être déplacé en accord avec ladite caméra 4, 4'.

Le sujet 6 pourra ainsi faire l'objet de plusieurs prises de vues consécutives sous différents angles et selon différents plans permettant de relever autant de vues planes qu'il est nécessaire pour pouvoir déterminer les paramètres caractéristiques suffisants à l'identification et à la classification du sujet 6. Bien entendu, la caméra 4, 4' mobile peut également être remplacée par n caméras fixes disposées aux endroits appropriés.

L'unique caméra 4, 4' au moins présente pourra également être fixe, les vues de face et de profil du sujet à étudier étant effectuées consécutivement, après une rotation adéquate dudit sujet.

Le module 2 d'acquisition et de traitement de la ou des vues et d'extraction se présente avantageusement sous la forme d'un circuit d'interface vidéo, et d'une unité de traitement d'images, connus par l'homme de l'art.

Le simulateur de réseau neuronal précité permet, au moyen de procédures d'apprentissage, d'affiner la classification et d'augmenter l'efficacité du module 3 en réduisant considérablement le temps de travail de l'unité centrale 7.

La constitution et le mode de fonctionnement d'un tel simulateur de réseau neuronal sont notamment décrits dans le brevet US-A-4 326 259, délivré le 20 avril 1982, au nom de Nestor Associates et le programme de génération de représentations tridimensionnelles peut être du type connu par l'homme de l'art sous l'appellation "modèleur" ou encore "générateur de facettes".

Le module 3 peut également comporter un dispositif de visualisation de la représentation tridimensionnelle, un dispositif de manipulation de cette dernière et un dispositif de lecture et d'enregistrement de mémoires optiques sous forme de cartes individuelles de faibles dimensions (non représentés).

Il est ainsi possible de stocker l'ensemble des caractéristiques dimensionnelles du sujet et de sa représentation tridimensionnelle, sur un support, du type "pièce d'identité", pouvant être directement exploité par un commerçant, par exemple, équipé d'un appareil de lecture et de visualisation adapté. Ce dernier pourra alors réaliser des essais d'habillage virtuels, sous le contrôle du sujet à habiller et sans prise de mesures réelle. La lecture et l'écriture des supports optiques peuvent être avantageusement réalisées par l'intermédiaire d'un laser.

L'invention a également pour objet un procédé automatique d'identification, de classification et de représentation de sujets présentant des formes variables non standardisées, consistant, essentiellement, à réaliser au moins une prise de vue plane, préférentiellement contrastée, du sujet à étudier, à prendre en compte et à traiter la ou les vues réalisées, puis à en extraire un ou plusieurs paramètres dimensionnels caractéristiques donnés, puis à lancer une procédure d'identification et de classification du sujet à étudier, sur la base du ou des paramètres caractéristiques extraits, ensuite, en fonction du résultat de ladite procédure, soit à indiquer les coordonnées de la classe à laquelle le sujet appartient, soit à générer une nouvelle classe définie par les paramètres dudit sujet ou à intégrer ledit sujet à une classe existante en mémorisant ses paramètres caractéristiques et à réorganiser la structure de classification en conséquence, et, enfin, le cas échéant, à réaliser une représentation tridimensionnelle approchante, sous forme d'enveloppe, du sujet à étudier à partir, d'une part, de paramètres dimensionnels extraits de la ou des vues précitées et, d'autre part, de paramètres dimensionnels correspondants et d'une représentation tridimensionnelle d'un modèle de référence représentatif de la classe à laquelle le sujet à étudier appartient.

Les classes initiales, caractérisées par les valeurs particulièrement de leurs paramètres d'entrée, notamment les paramètres dimensionnels caractéristiques de leurs modèles de référence, pourront, par exemple, être établies en fonction de données statistiques résultant d'une étude préalable sur une population donnée de sujets 6 ou encore en mémorisant les valeurs des paramètres d'un nombre donné de modèles types de sujets 6.

Bien entendu, la détermination des paramètres caractéristiques devra, lors de la phase d'initialisation et lors de la mise en oeuvre du procédé, être réalisée nécessairement dans des conditions identiques.

Selon une caractéristique de l'invention, la prise en compte et le traitement de la ou des vues réalisées consistent à regrouper les différentes vues éventuelles et à définir, sur chaque vue, le contour du sujet à étudier.

L'extraction des paramètres caractéristiques consiste ensuite à effectuer une série ordonnée de mesures de distances d1, d2, d3, d4, d5, d6, d7, d8, d9, d10 entre des points déterminés du ou des contours obtenus (figure 2).

Conformément à une caractéristique supplémentaires de l'invention, les paramètres extraits sont répartis en au moins deux groupes, chaque groupe de paramètres étant soumis à une procédure d'identification et de classification distincte, permettant d'obtenir plusieurs classifications partielles correspondant aux différentes parties constitutives du sujet à étudier.

Dans le cas de sujets humains et, notamment, dans le cadre d'une application de l'invention dans le domaine de l'industrie et du commerce de l'habillement, les mesures de distance prises en compte pour la classification, sont avantageusement réalisées au niveau du thorax d1, d4, de la taille d2, d5 et du bassin d3, d6, la taille ou hauteur d7 du sujet étant également prise en compte.

En outre, il est également possible d'opérer deux classifications partielles du sujet, à savoir, une première classification pour la partie supérieure du sujet, au dessus de la taille par exemple, et une seconde classification partielle pour la partie inférieure, au dessous de la taille, permettant de définir une taille de veston et une taille de pantalon, éventuellement différentes, pour le même sujet.

Dans le cas où une représentation tridimensionnelle virtuelle du sujet à étudier est envisagée, la phase d'initialisation consiste également, à acquérir et à mémoriser, au préalable, d'une part, les représentations tridimensionnelles d'une pluralité de modèles de référence pour une population donnée de sujets et, d'autre part, des valeurs de mesures de distance m1, m2 effectuées sur lesdits modèles de référence, grâce aux prises de vue planes réalisées, au niveau de sections de coupe S transversales prédéterminées, ainsi que les hauteurs ou tailles d7 desdits modèles de référence.

Lors de la création d'une nouvelle classe, la représentation tridimensionnelle et les différents paramètres dimensionnels du sujet, constituant le modèle de référence de cette nouvelle classe, doivent également être mémorisés.

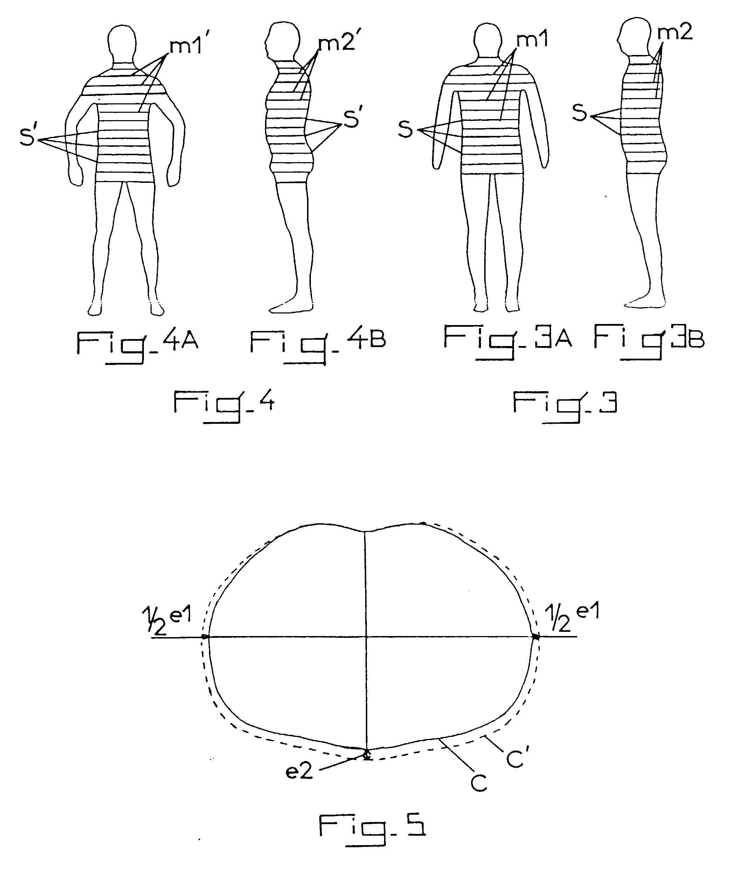

Comme le montrent les figures 3A et 3B des dessins annexés, les mesures de distance m1', m2' sont effectuées, sur les prises de vues planes réalisées, au niveau de sections de coupe S' transversales du sujet à étudier, distribuées sur toute la hauteur dudit sujet ou dans une zone de ce dernier servant à sa classification, la répartition des sections de coupe S' étant similaire à celle des sections de coupe S définies sur le modèle de référence correspndant audit sujet, mais néanmoins fonction du rapport des tailles ou des hauteurs d7 entre ledit sujet et ledit modèle de référence.

Ainsi, les sections de coupe S, S' peuvent, par exemple, être uniformément réparties au niveau d'une zone déterminée du modèle de référence et du sujet à étudier, la distance entre deux sections de coupe S' successives données, définies sur les vues planes dudit sujet, étant déterminée par la distance séparant les deux sections de coupe S correspondantes définies sur les vues planes du modèle de référence et par le rapport entre les tailles d7 du sujet et du modèle.

Conformément à une caractéristique supplémentaire de l'invention, représentée en partie à la figure 5 des dessins annexés, la réalisation tridimensionnelle approchante du sujet à étudier consiste à calculer, pour chaque paire de sections de coupe S et S' correspondantes, les écarts e1, e2 entre les valeurs des mesures de distance m1, m2 et m1', m2', effectuées sur les différentes vues planes, respectivement du modèle de référence considéré et du sujet à étudier, puis à construire, par interpolations, à partir des contours C des sections de coupe S mémorisées du modèle de référence et des écarts e1, e2 calculés précédemment, les contours C' des sections de coupe S' de la représentation approchante du sujet à étudier et, enfin, à regrouper, en les superposant de manière ordonnée et en tenant compte du rapport des tailles d7 entre modèle de référence et sujet à étudier, les différents contours C' obtenus précédemment en vue de constituer, après application d'un second traitement par interpolations, une enveloppe maillée tridimensionnelle représentant ledit sujet à étudier.

Les écarts e1, e2, de type algébrique, se définissent, dans le cadre de l'exemple décrit, de la manière suivante : e1 = m1' - m1 et e2 = m2' - m2.

Par conséquent, les seules données à stocker pour un sujet considéré sont constituées par la taille d7, l'identité de la classe à laquelle le sujet appartient ou du modèle de référence approchant le plus ce dernier et, enfin, les différents écarts e1, e2 définis ci-dessus, la représentation tridimensionnelle du sujet à étudier étant générée en fonction des besoins.

Enfin, le procédé conforme à l'invention peut également consister, dans le cas d'un sujet humain, à générer, à partir de patrons de couture adaptés à sa représentation tridimensionnelle, pouvant être stockés dans une mémoire optique contenant l'ensemble des caractéristiques dimensionnelles du sujet et de ladite représentation tridimensionnelle, des opérations d'essais d'habillage virtuels de cette dernière sur un écran de visualisation, après lecture, le cas échéant, de ladite mémoire optique.

Grâce à l'invention, il est donc possible de réaliser une identification et une classification automatiques et rapides de sujets présentant des formes variables non standardisées, ladite classification s'affinant et augmentant en efficacité au cours de mises en oeuvre répétées. Par ailleurs, une reconstitution en trois dimensions du sujet étudié à l'aide des données enregistrées pourra être réalisée ultérieurement, permettant ainsi d'opérer une simulation d'habillage tridimensionnelle dudit sujet.

La présente invention, bien que décrite essentiellement dans le cadre de la reconnaissance de formes humaines, peut être appliquée dans des domaines très divers tels que, par exemple, la microbiologie, pour la reconnaissance de bactéries, les prises de vues étant alors effectuées par l'intermédiaire d'une caméra montée sur un microscope.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif automatique d'identification, de classification et de représentation de sujets présentant des formes variables non standardisées, en particulier des sujets humains, constitué, d'une part, par un dispositif (1) de prise de vues planes du corps d'un sujet (6) composé d'au moins une caméra (4, 4') coopérant avec un écran de fond (5, 5') fortement contrasté par rapport au sujet (6) à identifier et à classer, d'autre part, par un module (2) d'acquisition et de traitement de la ou des vues et d'extraction d'au moins un paramètre dimensionnel caractéristique donné et, enfin, par un module (3) d'identification et de classification des sujets étudiés, au moyen du ou des paramètres caractéristiques extraits, ledit module d'identification et de classification étant constitué par une unité centrale (7) reliée à une base de données (8) et intègrant un programme de simulation de réseau neuronal auto-organisateur, destiné à réaliser une procédure d'identification et de classification du sujet à étudier, sur la base du ou des paramètres caractéristiques extraits, et, en fonction du résultat de la procédure, soit à indiquer les coordonnées de la classe à laquelle le sujet appartient, soit à générer une nouvelle classe définie par les paramètres du sujet ou à intégrer ledit sujet à une classe existante en mémorisant ses paramètres caractéristiques et à réorganiser la structure de classification en conséquence, le module (3) intègrant, de plus, un programme de génération de représentations tridimensionnelles, destiné à réaliser une représentation tridimensionnelle approchante, sous forme d'enveloppe, du sujet à étudier à partir, d'une part, de paramètres dimensionnels extraits de la ou des vues précitées et, d'autre part, de paramètres dimensionnels correspondants et d'une représentation tridimensionnelle d'un modèle de référence représentatif de la classe à laquelle le sujet à étudier appartient.

2. Dispositif selon la revendication 1, caractérisé en ce que le dispositif (1) de prise de vues comporte avantageusement deux caméras (4 et 4'), dont les axes de prise de vue forment un angle droit entre eux, chacune coopérant avec un écran de fond (5 et 5') correspondant.

3. Dispositif selon la revendication 1, caractérisé en ce que le dispositif (1) de prise de vues est constitué par une caméra (4, 4') mobile autour du sujet (6) à identifier et à classifier, l'écran de fond (5, 5') ) pouvant être déplacé en accord avec ladite caméra (4, 4').

4. Dispositif selon la revendication 1, caracterisé en ce que le module d'identification et de classification (3) comporte, en outre, un dispositif de visualisation de la représentation tridimensionnelle, un dispositif de manipulation de cette dernière et un dispositif de lecture et d'enregistrement de mémoires optiques sous forme de cartes de faibles dimensions.

5. Procédé automatique d'identification, de classification et de représentation de sujets présentant des formes variables non standardisées, consistant à réaliser au moins une prise de vue plane, préférentiellement contrastée, du sujet à étudier, à prendre en compte et à traiter la ou les vues réalisées, puis à en extraire un ou plusieurs paramètres dimensionnels caractéristiques donnés, puis à lancer une procédure d'identification et de classification du sujet à étudier en utilisant un réseau neuronal auto-organisateur simulé, sur la base du ou des paramètres caractéristiques extraits, ensuite, en fonction du résultat de la procédure, soit à indiquer les coordonnées de la classe à laquelle le sujet appartient, soit à générer une nouvelle classe définie par les paramètres du sujet ou à intégrer ledit sujet à une classe existante en mémorisant ses paramètres caractéristiques et à réorganiser la structure de classification en conséquence, et, enfin, le cas échéant, à réaliser une représentation tridimensionnelle approchante, sous forme d'enveloppe, du sujet à étudier à partir, d'une part, de paramètres dimensionnels extraits de la ou des vues précitées et, d'autre part, de paramètres dimensionnels correspondants et d'une représentation tridimensionnelle d'un modèle de référence représentatif de la classe à laquelle le sujet à étudier appartient.

6. Procédé selon la revendication 5, caractérisé en ce que la prise en compte et le traitement de la ou des vues réalisées consiste à regrouper les différentes vues éventuelles et à définir, sur chaque vue, le contour du sujet.

7. Procédé selon la revendication 6, caractérisé en ce que l'extraction de paramètres caractéristiques consiste à effectuer une série ordonnée de mesures de distances (d1, d2, d3, d4, d5, d6, d7, d8, d9, d10) entre des points déterminés du ou des contours obtenus.

8. Procédé selon l'une quelconque des revendications 5 à 7, caractérisé en ce que les paramètres extraits sont répartis en au moins deux groupes, chaque groupe de paramètres étant soumis à une procédure d'identification et de classification distincte, permettant d'obtenir plusieurs classifications partielles correspondant aux différentes parties constitutives du sujet à étudier.

9. Procédé selon la revendication 7, caractérisé en ce que, dans le cas de sujets humains, les mesures de distance prises en compte pour la classification, sont celles effectuées au niveau du thorax (d1, d4), de la taille (d2, d5) et du bassin (d3, d6), la taille ou hauteur (d7) du sujet étant également prise en compte.

10. Procédé selon l'une quelconque des revendications 5 à 9, caractérisé en ce qu'il consiste à mémoriser, au préalable, d'une part, les représentations tridimensionnelles d'une pluralité de modèles de référence pour une population donnée de sujets et, d'autre part, des valeurs de mesures de distance (m1, m2) effectuées sur lesdits modèles de référence, grâce aux prises de vue planes réalisées, au niveau de sections de coupe (S) transversales prédéterminées, ainsi que les hauteurs ou tailles (d7) desdits modèles de référence.

11. Procédé selon la revendication 10, caractérisé en ce que des mesures de distance (m1', m2') sont effectuées, sur les prises de vue planes réalisées, au niveau de sections de coupe (S') transversales du sujet à étudier, distribuées sur toute la hauteur dudit sujet ou dans une zone du sujet servant à sa classification, la répartition des sections de coupe (S') étant similaire à celle des sections de coupe (S) définies sur le modèle de référence correspondant audit sujet, mais néanmoins fonction du rapport des tailles ou des hauteurs (d7) entre ledit sujet et ledit modèle de référence.

12. Procédé selon l'une quelconque des revendications 10 et 11, caractérisé en ce que la réalisation de la représentation tridimensionnelle approchante du sujet à étudier consiste à calculer, pour chaque paire de sections de coupe (S et S') correspondantes, les écarts (e1, e2) entre les valeurs des mesures de distance (m1, m2 et m1', m2') effectuées sur les différentes vues planes, respectivement du modèle de référence considéré et du sujet à étudier, puis à construire, par interpolations, à partir des contours (C) des sections de coupe (S) mémorisées du modèle de référence et des écarts (e1, e2) calculés précédemment, les contours (C') des sections de coupe (S') de la représentation approchante du sujet à étudier et, enfin, à regrouper, en les superposant de manière ordonnée et en tenant compte du rapport des tailles (d7) entre modèle de référence et sujet à étudier, les différents contours (C') obtenus précédemment en vue de constituer, après application d'un traitement par interpolations, une enveloppe maillée tridimensionnelle représentant le sujet à étudier.

13. Procédé selon l'une quelconque des revendications 5 à 12, caractérisé en ce qu'il consiste, en outre, dans le cas d'un sujet humain, à générer, à partir de patrons de couture adaptés à la représentation tridimensionnelle, pouvant être stockés dans une mémoire optique contenant l'ensemble des caractéristiques dimensionnelles dudit sujet et de sa représentation tridimensionnelle, des opérations d'essais d'habillage virtuels de ladite représentation tridimensionnelle sur un écran de visualisation, après lecture, le cas échéant, de ladite mémoire optique.

## Claims

1. Automatic device for identification, classification and representation of subjects having non-standardised variable shapes, in particular human subjects consisting, on the one hand, of a device (1) for taking plane shots of the body of a subject (6) composed of at least one camera (4, 4') cooperating with a background screen (5, 5') markedly contrasting with the subject (6) to be identified and classified, on the other hand, of a module (2) for the acquisition and processing of the shot or shots and extraction of at least one given characteristic dimensional parameter and, finally, of a model (3) for identification and classification of the investigated subjects, by means of one or more of the extracted characteristic parameters, said module for identification and classification consisting of a central unit (7) connected to a database (8) and incorporating a program for simulating a self-organising neuron network, intended to produce a procedure for identification and classification of the study to be investigated on the basis of the extracted characteristic parameter or parameters and, depending on the result of the procedure, either to indicate the coordinates of the class to which the subject belongs or to generate a new class defined by the parameters of the subject or to integrate said subject in an existing class while storing its characteristic parameters and to reorganise the classification structure as a consequence, the module (3) incorporating, moreover, a program for generation of three-dimensional representations intended to produce a three-dimensional representation approximating, in envelope form, the subject to be investigated from, on the one hand, dimensional parameters extracted from the aforementioned shot or shots and, on the other hand, corresponding dimensional parameters and a three-dimensional representation of a reference model representative of the class to which the subject to be investigated belongs.

2. Device according to claim 1, characterised in that the device (1) for taking shots advantageously comprises two cameras (4 and 4') of which the shooting axes form a right angle with one another, each one cooperating with a corresponding background screen (5 and 5').

3. Device according to claim 1, characterised in that the device (1) for taking shots consists of a camera (4, 4') capable of moving round the subject (6) to be identified and classified, the background screen (5, 5') being displaceable in accordance with said camera (4, 4').

4. Device according to claim 1, characterised in that the module for identification and classification (3) also comprises a device for displaying the three-dimensional representation, a device for manipulating it and a device for reading and recording optical memories in the form of cards having small dimensions.

5. Automatic process for identification, classification and representation of subjects having non-standardised variable shapes which involves producing at least one plane, preferably contrasting, shot of the subject to be investigated, taking into consideration and processing the shot or shots taken then extracting from them one or more given characteristic dimensional parameters, then initiating a procedure for identification and classification of the subject to be investigated by using a simulated self-organising neuron network on the basis of the extracted characteristic parameter or parameters then, depending on the result of the procedure, either indicating the coordinates of the class to which the subject belongs or generating a new class defined by the parameters of the subject or incorporating said subject in an existing class while storing its characteristic parameters and reorganising the classification structure as a consequence and, finally, if applicable, producing a three-dimensional representation approximating, in envelope form, the subject to be investigated on the basis, on the one hand, of dimensional parameters extracted from the aforementioned shot or shots and, on the other hand, of corresponding dimensional parameters and a three-dimensional representation of a reference model representative of the class to which the subject to be investigated belongs.

6. Process according to claim 5, characterised in that the taking into consideration and processing of the shots taken involves collecting the various possible shots and defining the contour of the subject on each shot.

7. Process according to claim 6, characterised in that the extraction of characteristic parameters involves taking an ordered series of measurements of distances (d1, d2, d3, d4, d5, d6, d7, d8, d9, d10) between predetermined points of the contour or contours obtained.

8. Process according to any one of claims 5 to 7, characterised in that the extracted parameters are distributed over at least two groups, each group of parameters being subjected to a distinct identification and classification procedure allowing several partial classifications to be obtained corresponding to the various constituent parts of the subject to be investigated.

9. Process according to claim 7, characterised in that, in the case of human subjects, the distance measurements taken into consideration for classification are those taken in the region of the thorax (d1, d4), the waist (d2, d5) and the pelvis (d3, d6), the size or height (d7) of the subject also being taken into consideration.

10. Process according to any one of claims 5 to 9, characterised in that it involves storing, beforehand, on the one hand the three-dimensional representations of a plurality of reference models for a given population of subjects and, on the other hand, values of distance measurements (ml, m2) taken from said reference models by means of the plane shots taken in the region of predetermined cross sections (S) as well as the heights or sizes (d7) of said reference models.

11. Process according to claim 10, characterised in that the distance measurements (m1', m2') are taken on the plane shots produced, in the region of cross sections (S') of the subject to be investigated, distributed over the entire height of said subject or in a region of the subject used for the classification thereof, the distribution of the cross sections (S') being similar to that of the cross sections (S) defined on the reference model corresponding to said subject but still depending on the ratio of the sizes or heights (d7) between said subject and said reference model.

12. Process according to any one of claims 10 and 11, characterised in that the production of the three-dimensional representation approximating the subject to be investigated involves calculating, for each pair of corresponding cross sections (S and S'), the deviations (e1, e2) between the values of distance measurements (m1, m2 and m1', m2') taken on the various plane views of the reference model under consideration and the subject to be investigated respectively then constructing, by interpolation, from the contours (C) of the stored cross sections (S) of the reference model and of the previously calculated deviations (e1, e2), the contours (C') of the cross sections (S') of the representation approximating the subject to be investigated and, finally, collecting, by superimposing them in an ordered manner and taking into consideration the ratio of the sizes (d7) between reference model and subject to be investigated, the various contours (C') previously obtained with the aim of forming, after application of processing by interpolation, a three-dimensional mesh envelope representing the subject to be investigated.

13. Process according to any one of claims 5 to 12, characterised in that it also involves, in the case of a human subject, generating from sewing patterns adapted to the three-dimensional representation which can be stored in an optical memory containing all the dimensional characteristics of said subject and its three-dimensional representation, operations for testing virtual dressing of said three-dimensional representation on a display screen after reading of said optical memory if applicable.

## Patentansprüche

1. Automatische Vorrichtung zur Erkennung, Einteilung und Darstellung von Gegenständen und Wesen, die unterschiedliche, nicht standardisierte Formen aufweisen, insbesondere Menschen, einerseits bestehend aus einer Vorrichtung (1) zur Aufnahme von flächigen Bildern vom Körper eines Gegenstandes (6), bestehend aus mindestens einer Kamera (4, 4'), die mit einem Hintergrundbildschirm (5, 5') zusammenwirkt, der in bezug auf den zu erkennenden und einzuteilenden Gegenstand (6) einen starken Kontrast aufweist, und andererseits aus einem Modul (2) zur Erfassung und Bearbeitung des bzw. der Bilder und zur Ableitung von mindestens einem gegebenen charakteristischen Dimensionsparameter und schließlich einem Modul (3) zur Erkennung und Einteilung der betrachteten Gegenstände mit Hilfe des bzw. der abgeleiteten charakteristischen Parameter, wobei dieses Modul zu Erkennung und Einteilung von einer Zentraleinheit (7) gebildet wird, die an eine Datenbasis (8) angeschlossen ist und ein Programm zur Simulation eines selbstorganisierenden Neuronennetzes umfaßt, das dazu bestimmt ist, ein Verfahren zur Erkennung und Einteilung des zu untersuchenden Gegenstandes auf Basis des bzw. der abgeleiteten charakteristischen Parameter durchzuführen und in Abhängigkeit von dem Ergebnis des Verfahrens entweder die Koordinaten der Klasse, der der Gegenstand angehört, anzugeben oder eine neue Klasse zu bilden, die durch die Parameter des Gegenstandes definiert ist, oder diesen Gegenstand in eine bestehende Klasse einzugliedern, indem seine charakteristischen Parameter gespeichert werden, und folglich die Einteilungsstruktur umzuorganisieren, wobei das Modul (3) ferner ein Programm zur Erzeugung von dreidimensionalen Darstellungen umfaßt, das dazu bestimmt ist, eine annähernde dreidimensionale Darstellung in Form einer Hülle von dem zu untersuchenden Gegenstand einerseits ausgehend von den abgeleiteten Dimensionsparametern des bzw. der vorgenannten Bilder und andererseits von entsprechenden Dimensionsparametern und von einer dreidimensionalen Darstellung eines Bezugsmodells, das für die Klasse, der der zu untersuchende Gegenstand angehört, repräsentativ ist, herzustellen.

2. Vorrichtung nach Anspruch 1, dadurch gekennzeichnet, daß die Vorrichtung (1) zur Aufnahme von Bildern vorzugsweise zwei Kameras (4 und 4') umfaßt, deren Bildaufnahmeachsen zwischen sich einen rechten Winkel bilden, wobei jede von ihnen mit einem entsprechenden Hintergrundbildschirm (5 und 5') zusammenwirkt.

3. Vorrichtung nach Anspruch 1, dadurch gekennzeichnet, daß die Bildaufnahmevorrichtung (1) von einer Kamera (4, 4') gebildet wird, die um den zu erkennenden und einzuteilenden Gegenstand (6) herum beweglich angeordnet ist, wobei der Hintergrundbildschirm (5, 5') in Übereinstimmung mit dieser Kamera (4, 4') verschoben werden kann.

4. Vorrichtung nach Anspruch 1, dadurch gekennzeichnet, daß das Modul (3) zur Erkennung und Einteilung ferner eine Vorrichtung zur Sichtbarmachung der dreidimensionalen Darstellung, eine Vorrichtung zur Bedienung der letztgenannten und eine Vorrichtung zum Lesen und Aufzeichnen von optischen Speichern in Form von Karten geringer Abmessungen umfaßt.

5. Automatisches Verfahren zur Erkennung, Einteilung und Darstellung von Gegenständen, die unterschiedliche, nicht standardisierte Formen aufweisen, darin bestehend, daß mindestens eine flächige Aufnahme, vorzugsweise mit Kontrast, von dem zu untersuchenden Gegenstand durchgeführt wird, daß das oder die hergestellten Bilder berücksichtigt und bearbeitet werden, daß sodann daraus ein oder mehrere gegebene charakteristische Dimensionsparameter abgeleitet werden, daß sodann ein Verfahren zur Erkennung und Einteilung des zu untersuchenden Gegenstandes gestartet wird, wobei ein selbstorganisierendes simuliertes Neuronennetz auf Basis des bzw. der abgeleiteten charakteristischen Parameter verwendet wird, daß sodann in Abhängigkeit von dem Ergebnis des Verfahrens entweder die Koordinaten der Klasse, der der Gegenstand angehört, angegeben oder eine neue Klasse gebildet wird, die durch die Parameter des Gegenstandes definiert ist, oder der Gegenstand in eine bestehende Klasse eingegliedert wird, indem seine charakteristischen Parameter gespeichert werden und folglich die Einteilungsstruktur umorganisiert wird und schließlich gegebenenfalls eine annähernde dreidimensionale Darstellung in Form einer Hülle von dem zu untersuchenden Gegenstand einerseits ausgehend von Dimensionsparametern, die aus dem bzw. den vorgenannten Bildern abgeleitet wurden, und andererseits von entsprechenden Dimensionsparametern und von einer dreidimensionalen Darstellung eines Bezugsmodells, das für die Klasse, der der zu untersuchende Gegenstand angehört, repräsentativ ist, hergestellt wird.

6. Verfahren nach Anspruch 5, dadurch gekennzeichnet, daß die Berücksichtigung und die Bearbeitung des bzw. der hergestellten Bilder darin besteht, die verschiedenen möglichen Bilder zusammenzufassen und auf jedem Bild die Kontur des Gegenstandes zu definieren.

7. Verfahren nach Anspruch 6, dadurch gekennzeichnet, daß die Ableitung von charakteristischen Parametern darin besteht, eine geordnete Reihe von Abstandsmessungen (d1, d2, d3, d4, d5, d6, d7, d8, d9, d10) zwischen bestimmten Punkten der erhaltenen Kontur(en) durchzuführen.

8. Verfahren nach einem der Ansprüche 5 bis 7, dadurch gekennzeichnet, daß die abgeleiteten Parameter in mindestens zwei Gruppen aufgeteilt werden, wobei jede Gruppe von Parametern einem verschiedenen Erkennungs- und Einteilungsverfahren unterzogen wird, das es ermöglicht, mehrere Teileinteilungen zu erhalten, die den verschiedenen Teilen, aus denen der zu untersuchende Gegenstand besteht, entsprechen.

9. Verfahren nach Anspruch 7, dadurch gekennzeichnet, daß im Falle von Menschen die für die Einteilung berücksichtigten Abstandsmessungen die im Bereich des Brustkorbes (d1, d4), der Taille (d2, d5) und des Beckens (d3, d6) durchgeführten sind, wobei die Größe bzw. Höhe (d7) des Gegenstandes auch berücksichtigt wird.

10. Verfahren nach einem der Ansprüche 5 bis 9, dadurch gekennzeichnet, daß es darin besteht, im vorhinein einerseits die dreidimensionalen Darstellungen einer Vielzahl von Bezugsmodellen für eine gegebene Population von Gegenständen und andererseits Werte von Abstandsmessungen (m1, m2), die an diesen Bezugsmodellen durchgeführt wurden, mit Hilfe der Aufnahmen von flächigen Bildern, die im Bereich von vorbestimmten Querschnitten (S) durchgeführt wurden, sowie die Höhen bzw. Größen (d7) dieser Bezugsmodelle zu speichern.

11. Verfahren nach Anspruch 10, dadurch gekennzeichnet, daß Abstandsmessungen (m1', m2') an den Aufnahmen von flächigen Bildern vorgenommen werden, welche im Bereich von Querschnitten (S') des zu untersuchenden Gegenstandes hergestellt werden, die über die gesamte Höhe des Gegenstandes oder in einem Bereich des Gegenstandes, der zu seiner Einteilung dient, verteilt sind, wobei die Verteilung der Querschnitte (S') ähnlich jener der Querschnitte (S) ist, welche an dem dem Gegenstand entsprechenden Bezugsmodell definiert wurden, jedoch trotzdem in Abhängigkeit von den Größen bzw. Höhen (d7) zwischen dem Gegenstand und dem Bezugsmodell.

12. Verfahren nach einem der Ansprüche 10 und 11, dadurch gekennzeichnet, daß die Verwirklichung der annähernden dreidimensionalen Darstellung des zu untersuchenden Gegenstandes darin besteht, für jedes entsprechende Querschnittspaar (S und S') die Abstände (e1, e2) zwischen den Werten der Abstandsmessungen (m1, m2 und m1' und m2'), die an den verschiedenen flächigen Ansichten des betreffenden Bezugsmodells bzw. des zu untersuchenden Gegenstandes durchgeführt wurden, zu berechnen und sodann durch Interpolationen ausgehend von den Konturen (C) der gespeicherten Querschnitte (S) des Bezugsmodells und den vorher berechneten Abständen (e1, e2) die Konturen (C') der Querschnitte (S') der annähernden Darstellung des zu untersuchenden Gegenstandes zu erstellen und schließlich durch geordnetes Übereinanderlegen unter Berücksichtigung des Größenverhältnisses (d7) zwischen Bezugsmodell und zu untersuchendem Gegenstand die verschiedenen vorher erhaltenen Konturen (C') zusammenzufassen, um nach Bearbeitung mit Interpolationen eine maschige dreidimensionale Hülle zu erstellen, die den zu untersuchenden Gegenstand darstellt.

13. Verfahren nach einem der Ansprüche 5 bis 12, dadurch gekennzeichnet, daß es ferner darin besteht, im Falle eines Menschen ausgehend von Schnittschablonen, die an die dreidimensionale Darstellung angepaßt sind und in einem optischen Speicher gespeichert werden können, welcher die Gesamtheit der Dimensionscharakteristika des Gegenstandes und seiner dreidimensionalen Darstellung enthält, virtuelle Bekleidungsversuche der dreidimensionalen Darstellung auf einem Bildschirm zu erzeugen, nachdem gegebenenfalls der optische Speicher abgelesen wurde.
